# EUROPEAN PATENT APPLICATION

(11) **EP 3 171 280 A1**
(43) Date of publication of application: **24.05.2017**
(21) Application number: 15194972.4
(22) Date of filing: 17.11.2015
(51) Int. Cl.: G06F 17/30

(54) **PROVIDING A GRAPHICAL USER INTERFACE**

(71) Applicant: Zeeris Oy, 00150 Helsinki (FI)
(72) Inventor: Solapuro, Riku, 00150 Helsinki (FI); Boskovic, Zeljko, 00150 Helsinki (FI)
(74) Representative: Papula Oy

(57) **Abstract**

According to an aspect, there is provided a method for providing a graphical user interface. The method comprises arranging a plurality of data categories into multiple levels in a data structure, each level comprising data elements specific to a single data category, and enabling a user to enter a second level from a first level in the data structure by enabling a selection of a data element of the first level. The data elements of each level in the data structure correspond to user interface elements in the graphical user interface configured to be provided by a user device to a user.

## Description

### BACKGROUND

Users are able to user their electronic devices, such as PCs, laptops, tablets and smartphones, to browse through data stored in a device or in a network element accessible via a communication network. The used device provides a graphical user interface for the user with which to interact with. The graphical user interface is typically icon based and each icon represents an application or file that can be executed or opened.

It may be challenging to locate and sometimes it is not even possible to locate a desired data element with the current user interfaces provided to the user. The user may have to access multiple information levels before finding the desired data element.

### SUMMARY

The following presents a summary of the disclosure in order to provide a basic understanding to the reader. This summary is not an extensive overview of the disclosure and it does not identify key/critical elements or delineate the scope of the description. The purpose is to present concepts disclosed herein as a prelude to the more detailed description that is presented later.

According to a first aspect, there is provided a method for providing a graphical user interface. The method comprises arranging a plurality of data categories into multiple levels in a data structure, each level comprising data elements specific to a single data category, and enabling a user to enter a second level from a first level in the data structure by enabling a selection of a data element of the first level. The data elements of each level in the data structure correspond to user interface elements in the graphical user interface configured to be provided by a user device to a user.

In one embodiment, the selected data element comprises a range data element, the range data element enabling setting a range relating to the data element.

In one embodiment, the range data element comprises at least one of time, location, data sources, persons, trust levels or multiple search terms.

In one embodiment, alternatively or in addition, the method further comprises selecting at least one data element in at least one level adaptively.

In one embodiment, alternatively or in addition, the method further comprises enabling the user to define the contents of at least one level at least in part.

In one embodiment, alternatively or in addition, the method further comprises detecting context of the user and/or the user device used by the user; and adapting the contents of at least one level at least in part on the basis of the context.

In one embodiment, alternatively or in addition, the method further comprises analyzing data relating to at least one other user; and adapting the contents of at least one level at least in part on the basis of the analysis.

In one embodiment, alternatively or in addition, a level comprising data elements specific to a single data category comprises at least one data file, at least one application, an actionable element and/or at least one other data category.

According to a second aspect, there is provided a non-transitory computer readable medium having stored therein instructions executable by a computing device to perform the method of the first aspect.

According to a third aspect, there is provided an apparatus for providing a graphical user interface. The apparatus comprises at least one processing unit and at least one memory. The at least one memory stores program instructions that, when executed by the at least one processing unit, cause the apparatus to arrange a plurality of data categories into multiple levels in a data structure, each level comprising data elements specific to a single data category, and enable a user to enter a second level from a first level by enabling a selection of a data element of the first level. The data elements of each level in the data structure correspond to user interface elements in the graphical user interface configured to be provided by a user device to a user.

In one embodiment, the selected data element comprises a range data element, the range data element enabling setting a range relating to the data element.

In one embodiment, the range data element comprises at least one of time, location, data sources, persons, trust levels or multiple search terms.

In one embodiment, alternatively or in addition, the at least one memory stores program instructions that, when executed by the at least one processing unit, cause the apparatus to select at least one data element in at least one level adaptively.

In one embodiment, alternatively or in addition, the at least one memory stores program instructions that, when executed by the at least one processing unit, cause the apparatus to enable the user to define the contents of at least one level at least in part.

In one embodiment, alternatively or in addition, the at least one memory stores program instructions that, when executed by the at least one processing unit, cause the apparatus to detect context of the user and/or the user device used by the user, and adapt the contents of at least one level on the basis of the context.

In one embodiment, alternatively or in addition, the at least one memory stores program instructions that, when executed by the at least one processing unit, cause the apparatus to analyze data relating to at least one other user, and adapt the contents of at least one level at least in part on the basis of the analysis.

In one embodiment, alternatively or in addition, a level comprising data elements specific to a single data category comprises at least one data file, at least one application, an actionable element and/or at least one other data category.

In one embodiment, alternatively or in addition, the apparatus is a user device or a network server.

According to a fourth aspect, there is provided an apparatus for providing a graphical user interface. The apparatus comprises means for arranging a plurality of data categories into multiple levels in a data structure, each level comprising data elements specific to a single data category, and means for enabling a user to enter a second level from a first level by enabling a selection of a data element of the first level. The data elements of each level in the data structure correspond to user interface elements in the graphical user interface configured to be provided by a user device to a user.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. The embodiments described below are examples only and the scope of protection shall not be limited to the presented embodiments. In the drawings:
**Fig. 1** is a system diagram depicting an apparatus for providing a data structure to be searched by a user.
**Fig. 2A** illustrates a method according to one embodiment.
**Fig. 2B** illustrates a data structure according to one embodiment.
**Fig. 3A** illustrates a user interface according to one embodiment.
**Fig. 3B** illustrates a user interface according to another embodiment.
**Fig. 4A** illustrates a user interface according to one embodiment for setting a time-dependent range.
**Fig. 4B** illustrates another user interface when setting the time-dependent range.
**Fig. 5A** illustrates a user interface according to one embodiment for setting a location-dependent range.
**Fig. 5B** illustrates another user interface when setting the location-dependent range.
**Fig. 6** is a system diagram depicting a system for providing search information and network elements connected to the system.

Like reference numerals are used to designate like parts in the accompanying drawings.

### DETAILED DESCRIPTION

The detailed description provided below in connection with the drawings is intended as a description of the embodiments presented herein and is not intended to represent the only forms in which the present invention may be constructed or utilized. However, the same or equivalent functions and sequences may be accomplished by different embodiments.

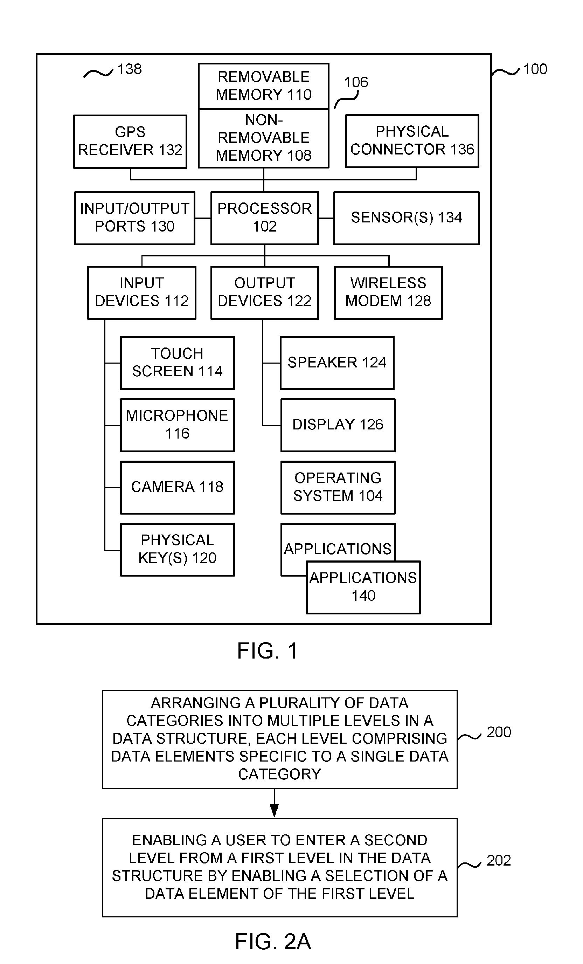

Fig. 1 is a system diagram depicting an apparatus 100 for providing a user interface including a variety of optional hardware and software components, shown generally at 138. Any components 138 in the apparatus 100 can communicate with any other component, although not all connections are shown, for ease of illustration. The apparatus 100 can be any of a variety of computing devices for example, a cell phone, a smartphone, a handheld computer, a tablet computer, a Personal Digital Assistant (PDA), etc.), a laptop computer, a personal computer, a network server etc.

The illustrated apparatus 100 can include a controller or processor 102 (e.g., signal processor, microprocessor, ASIC, or other control and processing logic circuitry) for performing such tasks as signal coding, data processing, input/output processing, power control, and/or other functions. An operating system 104 can control the allocation and usage of the components 138 and support for one or more application programs 140. The application programs can include common mobile computing applications (e.g., email applications, calendars, contact managers, web browsers, messaging applications), or any other computing application.

The illustrated apparatus 100 can include a memory 106. The memory 106 can include non-removable memory 108 and/or removable memory 110. The non-removable memory 108 can include RAM, ROM, flash memory, a hard disk, or other well-known memory storage technologies. The removable memory 610 can include flash memory or a Subscriber Identity Module (SIM) card, which is well known in mobile communication systems, or other well-known memory storage technologies, such as "smart cards". The memory 106 can be used for storing data and/or code for running the operating system 104 and the applications 140. If the apparatus 100 is a mobile phone or a smart phone, the memory 106 can be used to store a subscriber identifier, such as an International Mobile Subscriber Identity (IMSI), and an equipment identifier, such as an International Mobile Equipment Identifier (IMEI). Such identifiers can be transmitted to a network server to identify users and equipment.

The apparatus 100 can support one or more input devices 112, such as a touchscreen 114, microphone 116, camera 118 and/or physical keys or a keyboard 120 and one or more output devices 122, such as a speaker 124 and a display 126. Some devices can serve more than one input/output function. For example, the touchscreen 114 and the display 126 can be combined in a single input/output device. The input devices 112 can include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (EEG and related methods). Thus, in one specific example, the operating system 104 or applications 140 can comprise speech-recognition software as part of a voice user interface that allows a user to operate the apparatus 100 via voice commands. Further, the apparatus 100 can comprise input devices and software that allows for user interaction via a user's spatial gestures, such as detecting and interpreting gestures to provide input to a gaming application.

A wireless modem 128 can be coupled to an antenna (not shown) and can support two-way communications between the processor 102 and external devices, as is well understood in the art. The modem 128 is shown generically and can include a cellular modem for communicating with the mobile communication network and/or other radio-based modems (e.g., Bluetooth or Wi-Fi). The wireless modem 128 is typically configured for communication with one or more cellular networks, such as a GSM network for data and voice communications within a single cellular network, a WCDMA (Wide-band Code Division Multiple Access) network, an LTE (Long Term Evolution) network, a 4G LTE network, between cellular networks, or between the mobile apparatus and a public switched telephone network (PSTN) etc.

The apparatus 100 can further include at least one input/output port 130, a satellite navigation system receiver 132, such as a Global Positioning System (GPS) receiver, one or more sensors 134, and/or a physical connector 136, which can be a USB port, IEEE 1394 (FireWire) port, an Ethernet port and/or RS-232 port. The sensor 134 may refer to any sensor that is able to provide information about the apparatus 100, the user of the apparatus 100 or the surroundings of the apparatus 100. The sensor 134 may comprise, for example, an accelerometer, a gyroscope, a light sensor, a temperature sensor, a motion detector, air quality sensor, radiation sensor, etc.

The illustrated components 138 are not required or all-inclusive, as any components can deleted and other components can be added.

In one embodiment of Fig. 1, the apparatus 100 is a server apparatus that provides a user interface to a user apparatus via a communication link, for example, via the internet. In this embodiment, the apparatus 100 need not include, for example, a touch screen, a display, a camera, a speaker etc. in order to be able to provide the user interface to the user apparatus. In a server based solution the server may also be able to use information relating to a plurality of other users when providing the user interface to a user device.

Fig. 2A illustrates one embodiment for providing a graphical user interface. In 200 a plurality of data categories are arranged into multiple levels in a data structure. Each level comprises data elements specific to a single data category. A data category may refer to an upper level concept under which at least one data element somehow connected to the data category can be arranged. A data category may refer, for example, to at least one of images, a calendar, contacts, health related data, map/location, social network data, financial information, documents, emails, browser history data, physical dimensions of a person or an object, type of material, type of a personal object or device, means of transportation (e.g. bus, bicycle, car, scooter etc.), industrial or military equipment, element of industrial or military object, conceptual element of software or game (e.g. an icon, a negation bar, a score card etc.), type of an interior object (e.g. a table, a chair, a bed etc.), type of an electronic device, type of social activity (e.g. sports, personal relationship etc.), type of an object with a virtual reality, or trust level etc. A data element may refer, for example, to at least one of a data file (for example, an image file, a sound file, a document etc.), an actionable element, an executable application and another data category. The data structure itself may store the data elements specific to a single data category or at least part of them. The data structure may also include pointers to the data elements and the data elements are stored elsewhere, for example, in a cloud service, a network server and/or a user device.

For example, a data category "family" may comprise all family members, their calendars, actionable elements relating to at least one family member (for example, "call mom", "send email to dad", information providing a location of a family member) etc. In other words, a single data category may comprise a variety of different data elements somehow connected to the data category.

In 202 a user is enabled to enter a second level from a first level in the data structure by enabling a selection of a data element of the first level.

In one embodiment, the user is performing a search and the selection of the data element limits the subsequent search to the selected data element. For example, if the user selects a data element "images", the subsequent level comprises information (for example, actual images or other data elements associated with the "images" data element) specific to the selected data element.

The user may also be enabled to enter a second level by enabling a selection of a range data element, the range data element enabling setting a range within the data element to limit a subsequent search to the set range. By a range data element, a user is able to limit the search to a subgroup of the selected data element.

Each level in the data structure corresponds to a user interface view configured to be provided by a user device to the user. The data structure may comprise a base level comprising data elements corresponding to a graphical user interface when the user starts using the user device.

Further, the data structure and the levels within the data structure may be adaptive. At least one level in the data structure may be generated differently in different situations or locations. At least one level in the data structure may be context dependent. The term context may refer, for example, to time, location, family members, work, other users or any other piece of information based on which the user interface may be adapted for the user. Further, at least one level may be partly or wholly defined by the user. For example, a level may include static data elements defined by the user and these data elements may not vary based on the context.

When each level in the data structure comprises data elements specific only to a single data category, the user is provided with a graphical user interface where the user is able to find a desired data element quicker and in an easier way.

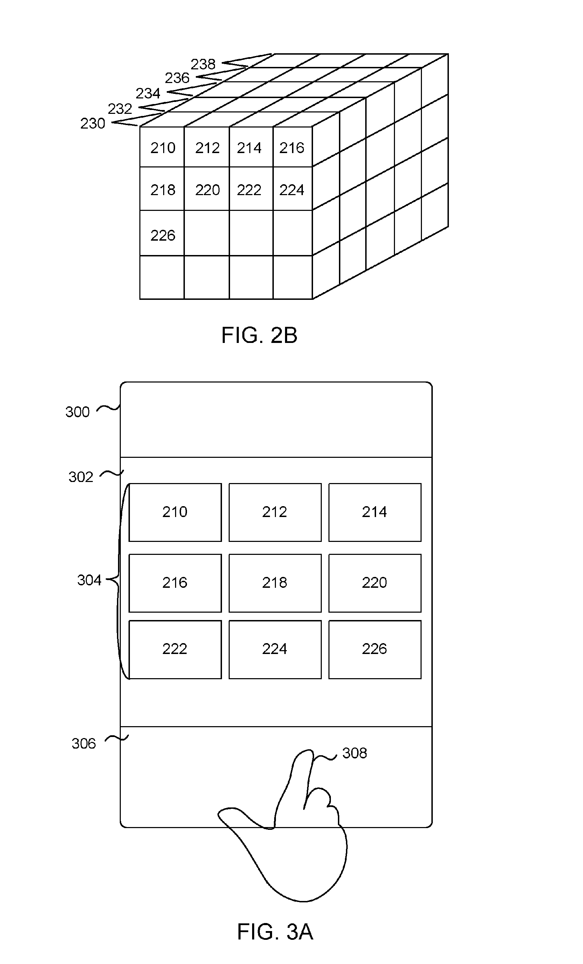

Fig. 2B illustrates a data structure according to one embodiment. Although Fig. 2B illustrates the data structure in the form of a cube, any other layered or levelled data structure type can be used.

The data structure comprises levels 230-238 and each level 230-238 represents one data category. A non-limiting list of possible data categories comprises, for example, one or more of the following:
- images
- calendar
- contacts
- health related data
- map/location
- social network data
- financial information
- documents
- emails
- browser history data
- physical dimensions of a person or an object
- type of material
- type of a personal object or device
- means of transportation (e.g. bus, bicycle, car, scooter etc.)
- industrial or military equipment
- element of industrial or military object
- conceptual element of software or game (e.g. an icon, a negation bar, a score card etc.)
- type of an interior object (e.g. a table, a chair, a bed etc.)
- type of an electronic device
- type of social activity (e.g. sports, personal relationship etc.)
- type of an object with a virtual reality
- trust level.

The data structure may not necessarily store the actual data relating to data element of a data category, and data may be stored in various data storages, personal devices, and/or external data storages accessible, for example, via a network connection.

Fig. 2B also illustrates that the level 230 comprises a plurality of data elements 210-226. The data elements 210-226 may refer to specific data files, for example, images, documents, actionable elements, applications etc. At least one of the data elements 210-226 may also refer to another data category.

Fig. 3A illustrates a graphical user interface 300 according to one embodiment. The graphical user interface 300 may be provided by any user operated device, for example, a mobile phone, a cell phone, a smartphone, a handheld computer, a tablet computer, a Personal Digital Assistant (PDA), a laptop computer, a personal computer etc. Further, the graphical user interface 300 may be generated by the device the user is using. Alternatively, the graphical user interface 300 may be generated by a remote service or server or system (for example, via the internet) and the device the user is using only displays the graphical user interface 300.

The graphical user interface 300 comprises an area 302 for displaying a set of data elements 304, for example, data elements 210-226 in a matrix. In this example, the matrix is a 3x3 matrix including nine data elements. In another embodiment, the size of the matrix may be different, for example, 2x2, 2x3, 3x3, 3x4, 4x4, 2x4 or any other size. The matrix size may also depend on the size of a display providing the graphical user interface 300. The graphical user interface 300 may comprise also a touch input area 306 via which the user is able to provide touch input, for example, with a finger 308 or a stylus. Alternatively or in addition, any other way of controlling the graphical user interface 300 and providing user input may be used, for example, voice, gestures, eye movement, motion etc.

In the example of Fig. 3A, the touch input area 306 is illustrated as a separate input area in the user interface 300. In another example, the touch input area 306 may not be a separate input area, and the user may be able to directly select and operate the data elements 304 via touch on a touch-sensitive display. In another example, the touch input area 306 may be provided by an external input device other than the device that is displaying the area 302.

The graphical user interface 300 may also refer to a user interface of a device used to navigate through data stored in the device and functions and applications provided by the device. Thus, in one embodiment, the user need not input a specific search query but the user is able to carry out a search by selecting one or more data elements.

When the user selects one of the data elements 210-226, a new set of data elements may be provided to the user in the area 302. The contents of the new set of data elements may depend on the selected data element. One or more data elements may be static, and they may remain unchanged also in the new set of data items. Further, in one embodiment, one or more data elements may be adaptive. At least one of the data elements in the new set may depend on, for example, the context of the user or the device (for example, location, time, user or device status etc.). Further, when the user interface is initiated, the data elements appearing in the area 302 may not always be the same. At least one of the data elements may depend on, for example, the context of the user or the device (for example, location, time, user or device status etc.). Further, the data elements 304 may be provided not only within a context within which the user is but also based on data available on at least one other user or user pattern.

Referring back to Fig. 2A, when the user selects a data element from the view 302, the user navigates to a new level in the data structure of Fig. 2B.

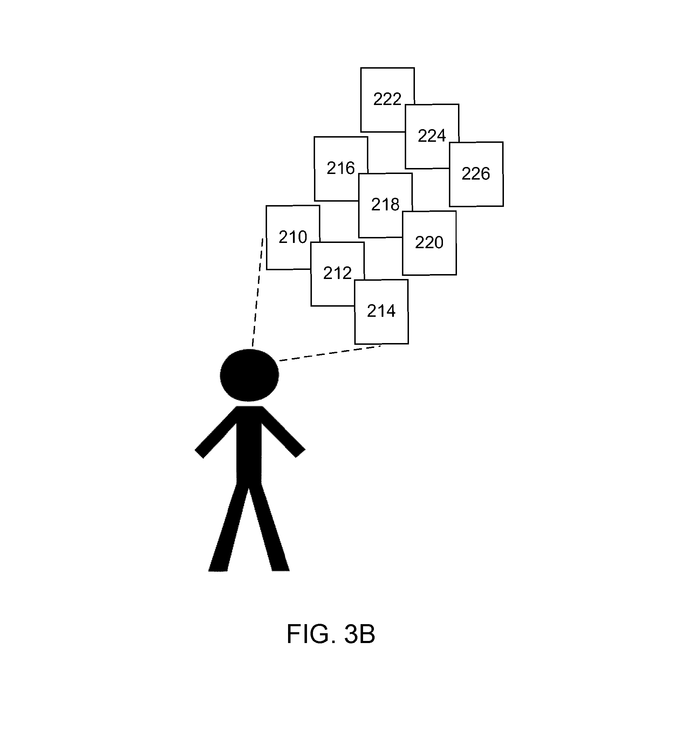

Although Fig. 3A illustrates that the user interface 300 may be provided on a display of a user device, in another embodiment the user interface 300 may be provided using a natural user interface (NUI), as illustrated in Fig. 3B by virtual data types 210-226. The user may be provided with a virtual reality user interface where data elements may be selected, for example, with user gestures, voice input or eye tracking.

In one embodiment of Fig. 3A or 3B, the user is looking for a place for lunch. One of the data elements 304 may be labelled as "lunch". By selecting "lunch", the user would then navigate to a level that helps the user to find the place (for example, a restaurant) for lunch. For example, the user may be able to set a radius for the place starting from the current location. Further, the level may show the availability and/or proximity of a specified set of other people (for example, family members). The level may also directly propose those places for lunch that are available and within a certain distance from all members of the specified set of people. In other words, in this level, the availability and location of the specified set of other people is determined and this information is made available for the user. Further, the level provided after a selection may provide also information from at least one external entity or sensor. For example, after selecting "lunch", the next level may provide a data element or data elements providing information on data quality or data transmission speed at the area where a candidate restaurant is located.

In another embodiment, the user is searching her/his financial data. The overall financial situation of the user has been poor for a long time. One of the data elements 304 may be labelled as "financial data". When the user selects this data element, the next level may provide an actionable data element enabling the user request to transfer the user's mortgage to a new financial institution or to request from the existing bank to provide mortgage free time to the user. The next level may thus not only depend on the user's own data but also on patters that have been learned based on data from at least one other user.

In another embodiment, the user is searching to rent a villa with some special features. Based on data relating to other users' searches, the system is able to determine a pattern that people searching for a villa with similar special features usually play tennis. Based on this information, the system may provide the user with a possibility to select and book a nearby tennis court. In other words, when the user selects the villa with the special features, the next level may include also information or a data element about the availability of a tennis court. In another embodiment, the user is searching wellness data relating to the user. One of the data elements 304 may be labelled as "wellness data". When the user selects the data element "wellness data", the next level may provide, for example, heart beat data. The user may also recently have been in a blood test and the test results are now available. The next level may provide an indication that based on the test results the user has a high cholesterol level. Due to this, the next level may also provide an actionable data element for the user to take Omega 3 and also an actionable data element providing a location of a store selling Omega 3. The system may also be able to suggest Omega 3 to the user because the system has learned from other users with similar data (i.e. high cholesterol level) that they are using Omega 3.

The context of a user, a user device, at least one other user and/or at least one external device may affect how a user interface provided to the user is arranged. The following provides some examples how the user interface of the user's device may be adapted:
1. An elderly person uses a mobile device. The person calls a first contact two times per week, a second contact two times per week, and a third contact two times per day. The user interface will be adapted for the user and it will use 70% of the screen size for adaptation and 30% for the usual user interface. The adaptation may split the screen to two smaller 'buttons' and one larger button (for example, the size of two smaller buttons). The first and second contacts have smaller buttons and the third contact has a larger button.
2. A relationship between contacts (for example, from an address book) is known. A parent has called his son three times, but the son has not answered. The user interface in the son's mobile device may be adapted and 100% of the screen area indicates Missed call - Call back. Further, the ring volume may be adjusted to be high on the son's mobile device.
3. A user measures blood pressure with an external device connected to the user's mobile device. The results measured by the external device are alarming and the user interface of the mobile device may be adapted to display a call doctor action button covering 70% of the display area.
4. A user is in a low temperature environment. The user has potentially hypothermia resulting in decrease in motorial skills. Due to this, the buttons in the user interface of a user device are enlarged.
5. A mobile device of a user notices very sudden and significant movement and lowered sound levels after that. The user interface of the user's mobile device is adapted to display emergency service covering 100% of the display.
6. A user is hiking. Navigation functionality becomes predominant in the user interface of the user's mobile device.
7. Large fluctuations on the stock exchange are registered. The user interface of a mobile device of a business user is adapted into actionable elements related to work, for example, an action element to notify responsible persons, trade stocks, etc.
8. A user is approaching his car. When the user's mobile device detects this situation, navigation functionality may be adapted to cover, for example, 70% of the display size of the mobile device.
9. A user is walking in a city late night. The user's mobile device detects this and adapts the user interface to display in 70% of the display "Call taxi" service element and a taxi application.
10. It is late in the evening (for example, later than 22:00). The user interface of the user's mobile device is adapted to display in 70% of the display size alarm functions.

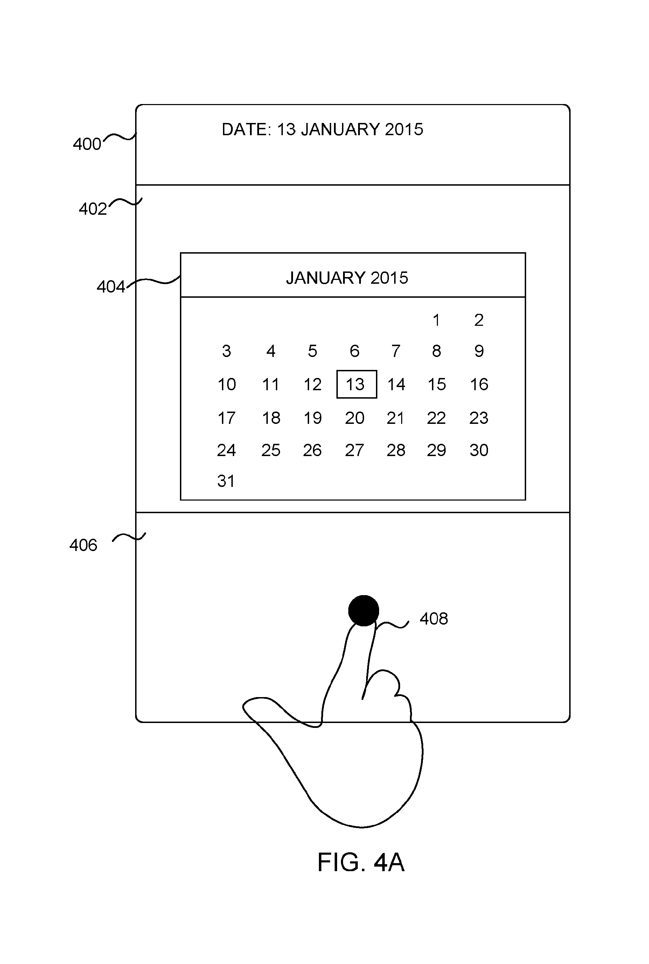

Fig. 4A illustrates a user interface 400 according to one embodiment for setting a time-dependent range. The user interface 400 comprises an area 402 displaying a calendar 404. The user interface 400 may comprise also a touch input area 406 via which the user is able to provide touch input, for example, with a finger 408 or a stylus.

The user interface 400 may be provided if a user selects "time" data element causing the user to enter a level that enables the user to specify time. An area 410 indicates that the user has selected a specific date (13 January 2015) as a starting point, with the touch input area 406 and the confirming the date selection, for example, by tapping the touch input area 406.

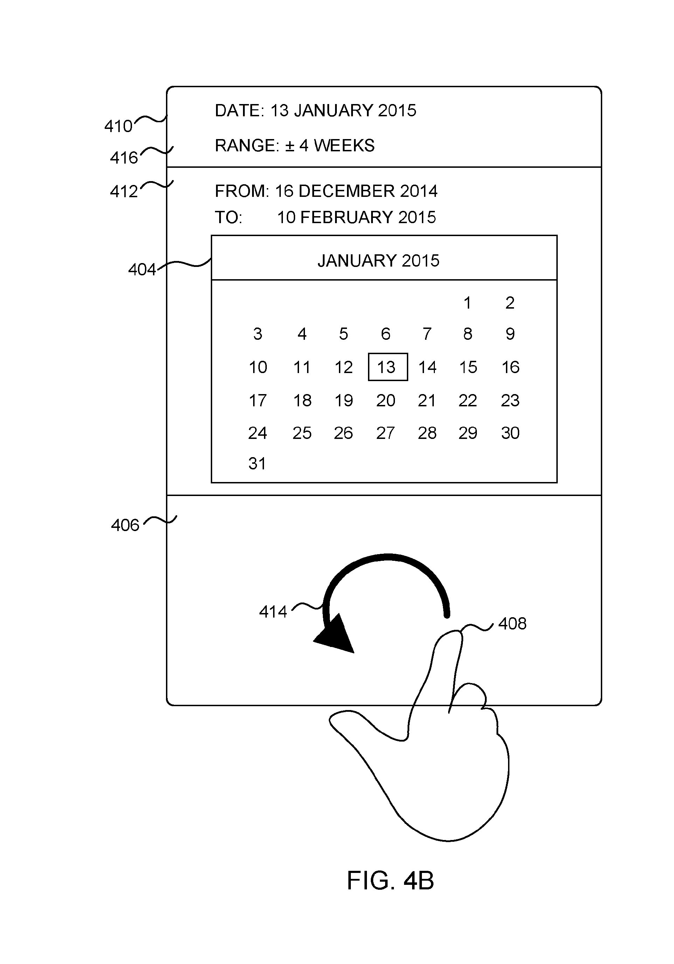

Fig. 4B illustrates a user interface 410 in which the user may select a date range, the selected date being in the middle of the date range. The user may make a gesture 414 on the touch input area 406 to set the range to a desired value. In Fig. 4B, as an example, the date range is counted as weeks. The user may perform an arc-like gesture 414 in contra clockwise direction to increase the date range. Similarly, the user may perform an arc-like gesture in clockwise direction to decrease the date range.

In Fig. 4B, the user sets the date range to ± 4 weeks around the set date 13 January 2013. An area 416 may provide an indication about the set date and the range. An area 412 in the user interface 410 may also indicate the starting date and the ending date of the set range. When the user is satisfied with the set date and range, the user may provide a confirmation by tapping the touch input area 406.

In another embodiment, instead of manually selecting a range (for example, a time range), a user may provide descriptive input for selecting the range. The descriptive input may comprise voice or written input. For example, the user may recite or write "start search from two weeks before we got married when we were travelling overseas". This causes a time range to be set from "two weeks before we got married" to

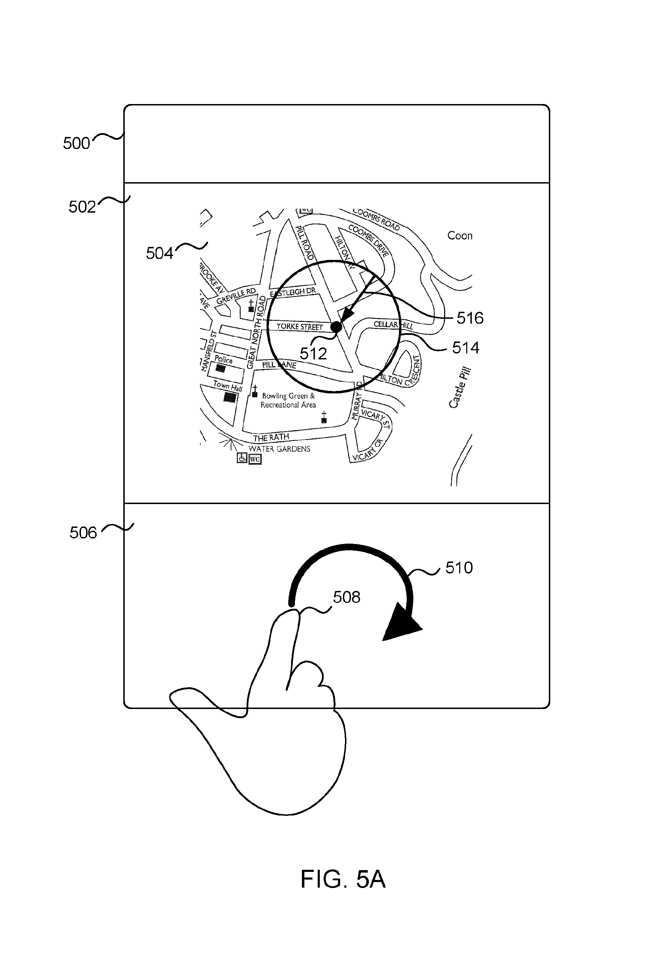

Fig. 5A illustrates a user interface 500 according to one embodiment for setting a location-dependent range. The user interface 500 comprises an area 502 displaying a map 504. The user interface 500 may comprise also a touch input area 506 via which the user is able to provide touch input, for example, with a finger 508 or a stylus. The user interface 500 may be provided if a user selects "location" data element causing the user to enter a level that enables the user to specify location.

A black dot 512 on the map 504 indicates that the user has selected this location as a centre point. The user may make a predefined gesture 510 on the touch input area 506 to set the radius 514 to a desired value. Although Fig. 5A illustrates a semicircle type of gesture and left to right direction, any other gesture and/or gesture direction may also be used. In Fig. 5A, the date range is counted as kilometres. The user may perform an arc-like gesture 510 in clockwise direction to decrease the radius 514 from the centre point 512.

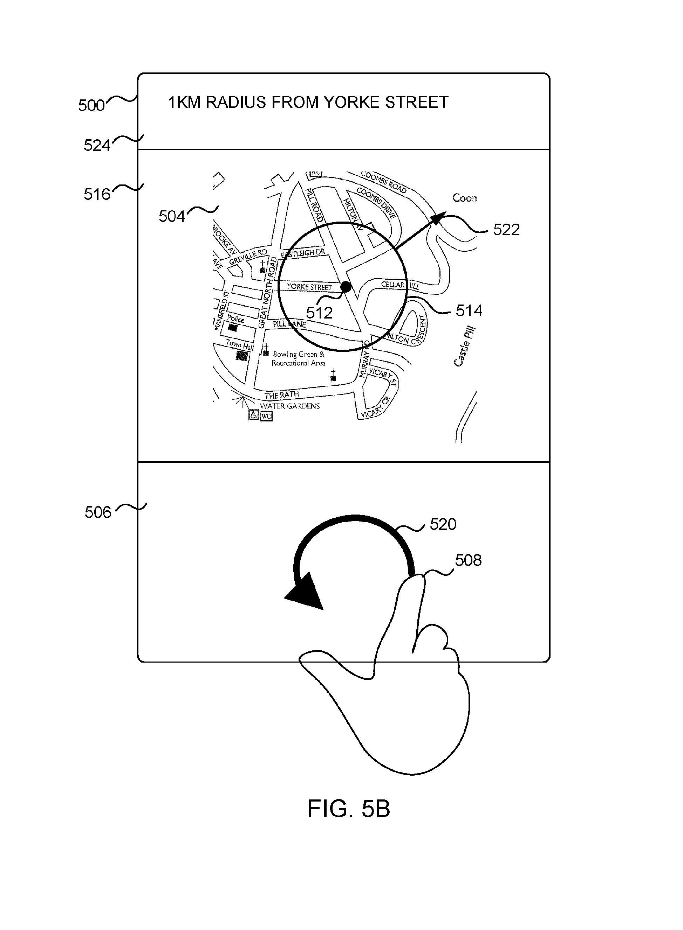

Fig. 5B illustrates a user interface 518 when the user performs an arc-like gesture 520 in contra clockwise direction to increase 522 the radius 514. An area 524 may indicate that the user has selected a specific location (Yorke Street) as a starting point and that a radius of 1km has been set. The user may confirm the range selection, for example, by tapping the touch input area 506.

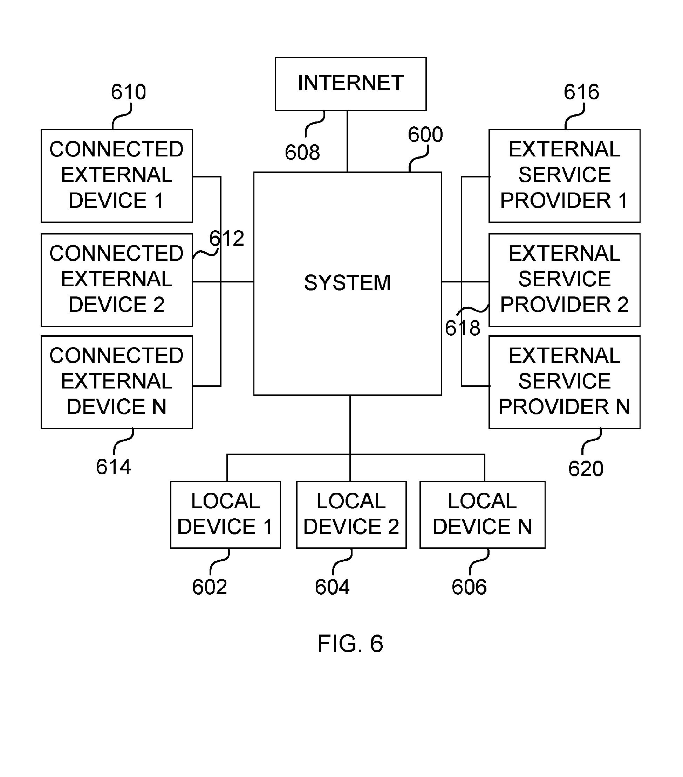

Fig. 6 is a system diagram depicting a system 600 for providing search information and network elements connected to the system 600. The structure of the system 600 has been discussed in more detail in Fig. 1 when discussing about the apparatus 100.

One or more local devices 602, 604, 606 may be connected to the system 600. The local devices 602, 604, 606 may refer to devices that are controlled by a user. Further, one or more external devices 610, 612, 614 may be connected to the system 600. The user may determine that certain devices not controlled by the user himself belong to the external devices 610, 612, 614 (for example, user devices of other family members). External devices 610, 612, 614 may also refer to devices of other users having no direct connection or relation to the user. The system 600 may configured to analyze the information relating to other users to find patterns that might be applicable also to the user.

External service providers 616, 618, 620 may refer to service providers that contain information relating to the user, for example, various cloud services, Facebook, Instagram etc.

A technical effect of one or more embodiments is that a new intuitive approach is provided for enabling a user to browse information from various data storages.

A technical effect of one or more embodiments is that a faster data finding is provided. Since data types can be selected from a matrix of data types, the user need not provide complicated menu based selections.

The embodiments described hereinbefore may be used in any combination with each other. Several of the embodiments may be combined together to form a further embodiment. A product or a method, to which the invention is related, may comprise at least one of the embodiments described hereinbefore.

Computer executable instructions may be provided using any computer-readable media that is accessible by computing based device. Computer-readable media may include, for example, computer storage media such as memory and communications media. Computer storage media, such as memory, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media is shown within the computing-based device it will be appreciated that the storage may be distributed or located remotely and accessed via a network or other communication link, for example by using communication interface.

The term 'computer' or 'computing-based device' is used herein to refer to any device with processing capability such that it can execute instructions. Those skilled in the art will realize that such processing capabilities are incorporated into many different devices and therefore the terms 'computer' and 'computing-based device' each include PCs, servers, mobile telephones (including smart phones), tablet computers, set-top boxes, media players, games consoles, personal digital assistants and many other devices.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible storage media include computer storage devices comprising computer-readable media such as disks, thumb drives, memory etc. and do not include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Alternatively, or in addition, the functionality described herein (such as the encryption and the biometric recognition algorithm) can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs). For example, some or all of the device functionality or method sequences may be performed by one or more hardware logic components.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that with the advancement of technology, the basic idea of the invention may be implemented in various ways. The invention and its embodiments are thus not limited to the embodiments described above; instead they may vary within the scope of the claims.

## Claims

1. A method for providing a graphical user interface, the method comprising:
arranging a plurality of data categories into multiple levels in a data structure, each level comprising data elements specific to a single data category;
enabling a user to enter a second level from a first level in the data structure by enabling a selection of a data element of the first level; and
wherein the data elements of each level in the data structure correspond to user interface elements in the graphical user interface configured to be provided by a user device to a user.

2. The method of claim 1, wherein the selected data element comprises a range data element, the range data element enabling setting a range relating to the data element.

3. The method of claim 2, wherein the range data element comprises at least one of time, location, data sources, persons, trust levels or multiple search terms.

4. The method of any of claims 1 - 3, further comprising:
selecting at least one data element in at least one level adaptively.

5. The method of any of claims 1 - 4, further comprising:
enabling the user to define the contents of at least one data level at least in part.

6. The method of any of claims 1 - 5, further comprising:
detecting context of the user and/or the user device used by the user; and
adapting the contents of at least one level at least in part on the basis of the context.

7. The method of any of claims 1 - 6, further comprising:
analyzing data relating to at least one other user; and
adapting the contents of at least one level at least in part on the basis of the analysis.

8. The method of any of claims 1 - 7, wherein a level comprising data elements specific to a single data category comprises at least one data file, at least one application, an actionable element and/or at least one other data category.

9. A non-transitory computer readable medium having stored therein instructions executable by a computing device to perform the method of any of claims 1 - 8.

10. An apparatus for providing a graphical user interface, the apparatus comprising:
at least one processing unit; and
at least one memory;
wherein the at least one memory stores program instructions that, when executed by the at least one processing unit, cause the apparatus to:
arrange a plurality of data categories into multiple levels in a data structure, each level comprising data elements specific to a single data category;
enable a user to enter a second level from a first level by enabling a selection of a data element of the first level; and
wherein the data elements of each level in the data structure correspond to user interface elements in the graphical user interface configured to be provided by a user device to a user.

11. The apparatus of claim 10, wherein the selected data element comprises a range data element, the range data element enabling setting a range relating to the data element.

12. The apparatus of claim 11, wherein the range data element comprises at least one of time, location, data sources, persons, trust levels or multiple search terms.

13. The apparatus of any of claims 10 - 12, wherein the at least one memory stores program instructions that, when executed by the at least one processing unit, cause the apparatus to:
select at least one data element in at least one level adaptively.

14. The apparatus of any of claims 10 - 13, wherein the at least one memory stores program instructions that, when executed by the at least one processing unit, cause the apparatus to:
enable the user to define the contents of at least one data level at least in part.

15. The apparatus of any of claims 10 - 14, wherein the at least one memory stores program instructions that, when executed by the at least one processing unit, cause the apparatus to:
detect context of the user and/or the user device used by the user; and
adapt the contents of at least one level on the basis of the context.

16. The apparatus of any of claims 10 - 15, wherein the at least one memory stores program instructions that, when executed by the at least one processing unit, cause the apparatus to:
analyze data relating to at least one other user; and
adapt the contents of at least one data level at least in part on the basis of the analysis.

17. The apparatus of any of claims 10 - 16, wherein a level comprising data elements specific to a single data category comprises at least one data file, at least one application, an actionable element and/or at least one other data category.

18. The apparatus of any of claims 10 - 17, wherein the apparatus is a user device or a network server.
